Europäisches Patentamt

European Patent Office

Office européen des brevets

(11) Veröffentlichungsnummer : **0 403 686 B1**

# (12) EUROPÄISCHE PATENTSCHRIFT

(45) Veröffentlichungstag der Patentschrift :
**25.03.92 Patentblatt 92/13**

(21) Anmeldenummer : **89113332.4**

(22) Anmeldetag : **20.07.89**

(51) Int. Cl.⁵ : **F16L 9/12,** F16C 3/02,
B65H 75/24, B29D 23/22

---

(54) **Rohr, insbesondere für eine Umlenkwelle, Expansionswelle oder dergleichen.**

(30) Priorität : **15.06.89 DE 8907321 U**

(43) Veröffentlichungstag der Anmeldung :
**27.12.90 Patentblatt 90/52**

(45) Bekanntmachung des Hinweises auf die
Patenterteilung :
**25.03.92 Patentblatt 92/13**

(84) Benannte Vertragsstaaten :
**AT BE CH DE ES FR GB GR IT LI LU NL SE**

(56) Entgegenhaltungen :
**EP-A- 0 122 024**
**DE-U- 8 634 752**
**GB-A- 1 480 928**
**US-A- 4 563 321**
**US-A- 4 787 583**

(73) Patentinhaber : **Chlupsa, Otto**
**Goethestrasse 52**
**W-6070 Langen (DE)**
Patentinhaber : **Vetter, Walter**
**Elisabethenstrasse 8**
**W-6087 Büttelborn 1 (DE)**

(72) Erfinder : **Chlupsa, Otto**
**Goethestrasse 52**
**W-6070 Langen (DE)**
Erfinder : **Vetter, Walter**
**Elisabethenstrasse 8**
**W-6087 Büttelborn 1 (DE)**

(74) Vertreter : **Gudel, Diether, Dr. et al**
**Patentanwälte Dipl.-Ing. G. Dannenberg Dr. P.**
**Weinhold Dr. D. Gudel Dipl.-Ing. S. Schubert**
**Dr. P. Barz Grosse Eschenheimer Strasse 39**
**W-6000 Frankfurt am Main 1 (DE)**

## Beschreibung

Die Erfindung betrifft ein Rohr, insbesondere für eine Umlenkwelle, Expansionswelle und dergleichen, mit den Merkmalen des Oberbegriffs von Anspruch 1.

Umlenkwellen werden in der Bahnen verarbeitenden Industrie eingesetzt, wo sie zum Umlenken der in der betreffenden Maschine verarbeiteten Bahnen dienen. Sie bestehen üblicherweise aus Stahlrohren. Dasselbe gilt für Expansionswellen, auch Spannwellen genannt, die zum Spannvorgang ihren Durchmesser ändern können. Derartige Expansionswellen aus Stahl sind beispielsweise in der DE-U-86 34 752 beschrieben.

Nachteilig bei den bekannten Rohren bzw. Wellen aus Stahl ist insbesondere ihr sehr hohes Gewicht. Beispielsweise wiegt eine acht Meter lange Umlenkwelle mit einem Durchmesser von 300 mm aus Stahlrohr etwa 1,25 t.

Es sind auch schon Rohre aus einem massiven kunstharzgetränkten Kohlefasergewebe bekannt, die aber ebenfalls verhältnismäßig schwer sind, wenn das Rohr allen mechanischen Anforderungen genügen soll.

Ein Leichtbaurohr mit den Merkmalen des Oberbegriffs von Anspruch 1 ist in der GB-A-1 480 928 beschrieben. Der Innenmantel besteht dort aus Fasergewebe und der Außenmantel aus einem Faserband bzw. Fasergewebe. Dieses bekannte Rohr dürfte in der Praxis aber immer noch nicht allen Beanspruchungen standhalten, insbesondere nicht allen Biegebeanspruchungen.

Der Erfindung liegt daher die Aufgabe zugrunde, ein Rohr, insbesondere eine Umlenkwelle oder eine Expansionswelle vorzuschlagen, das allen an die Welle im Betrieb gestellten Anforderungen genügt, insbesondere in Bezug auf seine Biegesteifigkeit, und das sich durch ein fühlbar verringertes Gewicht auszeichnen soll.

Die Lösung dieser Aufgabe gelingt durch die Merkmale des Anspruchs 1.

Der Innenmantel und der Außenmantel aus dem kunstharzgetränkten Gewebe wird man je nach den Anforderungen aufbauen.

Das Fasergewebe des Innenmantels sorgt für eine glatte Fläche beim Herstellen des Rohres, so daß dieses, ggfs. mit Hilfe eines geeigneten Trennmittels, leicht von einem Grundrohr abgezogen werden kann, auf dem das erfindungsgemäße Rohr hergestellt wird. Außerdem liefert das Fasergewebe den notwendigen Grundaufbau für die darauf aufgebrachten Faserkabel. Unter einem Faserkabel versteht man im Sinne der Erfindung eine Vielzahl von sich in axialer Richtung erstreckenden Fasern. Diese sorgen vor allem für die angestrebte hohe Biegesteifigkeit des Rohres.

Das Fasergewebe des Außenmantels deckt das Wabenmaterial ab und sorgt dafür, daß kein flüssiges Kunstharz in die Waben eindringt. Es liefert außerdem den notwendigen Aufbau für die darüber befindliche Schicht der Faserkabel, die sich auch hier im wesentlichen in Längsrichtung (Axialrichtung) des Rohres erstrecken und die wesentlich zur angestrebten hohen Biegesteifigkeit des Rohres beitragen. Der Aufbau wird nach außen von dem Faserband abgeschlossen mit dem Vliesstoff als Decklage, das die notwendige glatte Außenfläche des Rohres ergibt.

Durch die erfindungsgemäße Sandwichbauweise erhält man überraschend stabile und gleichzeitig leichte Rohre. Beispielsweise wiegt ein acht Meter langes Rohr mit einem Durchmesser von 300 mm, welches dieselben mechanischen Eigenschaften hat wie das eingangs erwähnte Rohr mit diesen bemessungen aus Stahl nur etwa 100 kg, d.h. weniger als ein Zehntel als ein vergleichbares Stahlrohr. Die mit einem derart leichtgewichtigen Rohr einhergehenden Vorteile liegen auf der Hand. Beispielsweise müssen nur entsprechend geringere Massen gelagert, beschleunigt und abgebremst werden und auch die Handhabung und der Transport sind fühlbar erleichtert. Es entsteht auch im Betrieb als Umlenkwelle keine statische Aufladung der betreffenden Warenbahn mehr, da kein Schlupf besteht. Die Handhabung und der Transport sind fühlbar erleichtert.

Für das Wabenmaterial wird man eine Wabenstruktur aus Papiermaterial oder Kunststoff verwenden, wie sie handelsüblich ist. Der Kunstharz verbindet den Sandwichaufbau untrennbar zu einem einstückigen Rohr. Das Wabenmaterial dient im Sandwichaufbau auch als Abstandshalter und ist auch aus statischen Gründen vorgesehen.

Auch bezüglich des Aufbaus des Außenmantels gilt das vorstehend zum Innenmantel Gesagte, d.h. daß das Fasergewebe vorzugsweise nach Art eines Strumpfes ausgebildet ist mit sich spitzwinklig kreuzenden Strängen aus den Fasern. Das Faserkabel besteht im wesentlichen aus einer Vielzahl von sich in axialer Richtung erstreckenden und rings um das Rohr angeordneten, zueinander im wesentlichen parallelen und nur gering miteinander verzwirnten Fasern. Das Faserband schließlich besteht ebenfalls aus sich im wesentlichen in axialer Richtung erstreckenden Fasern, die aber durch Querfäden zu einem flachen, leicht handhabbaren Band miteinander verbunden sind. Das Faserband muß sich nicht in axialer Richtung erstrecken, sondern kann beispielsweise auch spiralig aufgewickelt sien.

Allgemein sei erläutert, daß der Aufbau des Innenmantels und/oder des Außenmantels nicht aus reinen Kohlefasern bestehen muß. Kohlefasern oder Aramidfasern sollen aber überwiegen. Es können andere Fasern

EP 0 403 686 B1

beigemischt sein, beispielsweise Glasfasern.

Die Erfindung wird im folgenden anhand eines Ausführungsbeispiels näher erläutert, aus dem sich weitere wichtige Merkmale ergeben. Dabei wird als Beispiel von Kohlefasern gesprochen. Statt dessen oder zusätzlich können aber auch Aramidfasern vorgesehen sein oder auch Fasern aus anderen Materialien, die den notwendigen Anforderungen, insbesondere an die Zugfestigkeit, genügen.

Figur 1 zeigt schematisch in einer Stirnansicht ein erfindungsgemäßes Rohr, wobei zur Verdeutlichung der Aufbau des Rohres in der Einzelheit X vergrößert herausgezeichnet ist.

Die Figuren 2 bis 5 zeigen in vergrößertem Maßstab und in Draufsichten eine Kohlefasergewebe (Fig. 2), ein Kohlefaserkabel (Fig. 3) ein Kolhefaserband (Fig. 4) und ein Wabenmaterial (Fig. 5) in dieser Reihenfolge.

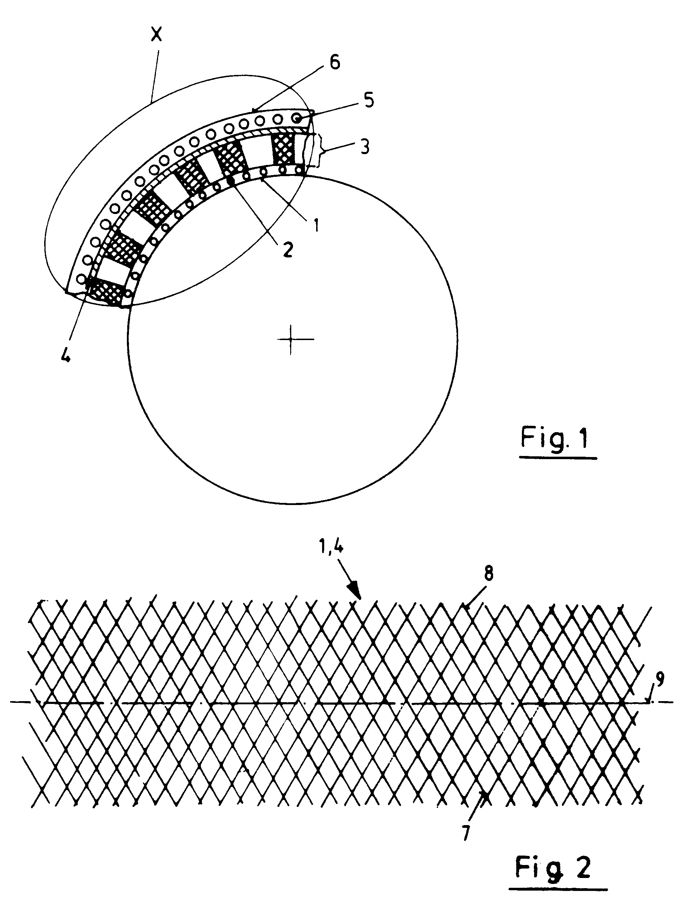

Das Rohr besteht aus einem Innenmantel, einer Mittelschicht aus Wabenmaterial und einem Außenmantel. Der Innenmantel besteht aus einem Kohlefasergewebe 1, über dem sich Kohlefaserkabel 2 befinden (Vgl. Fig. 1)

Die Mittelschicht besteht aus einem Wabenmaterial 3 aus geeignetem Papiermaterial, welches gegebenenfalls lackiert oder kunstharzgetränkt ist. Dies ist ein handelsübliches Produkt.

Der Außenmantel besteht aus einem Kohlefasergewebe 4, das grundsätzlich dem Kohlefasergewebe 1 entspricht. Darüber befindet sich ein Kohlefaserkabel 5 entsprechend dem Kohlefaserkabel 2 und nach außen ist das Rohr von einem Kohlefaserband 6 abgedeckt. Dies verläuft vorzugsweise spiralig um das Rohr.

Der aus den Schichten 1, 2 bestehende Innenmantel ist kunstharzgetränkt und dasselbe gilt für den Außenmantel, der aus den Schichten 4, 5, 6 besteht.

Die Mittelschicht braucht nicht aus Papiermaterial zu bestehen. Für sie kann vielmehr jedes geeignete Material in Wabenform verwendet werden. Die die Waben ausbildenden Wände verlaufen in radialer Richtung.

Fig. 2 zeigt eine Ansicht des flach gelegten Kohlefasergewebes 1, 4 aus der auch die sich spitzwinklig kreuzenden Stränge 7, 8 aus Kohlefasern ersichtlich sind. Die Achse des Rohres nach Fig. 1 ist bei Pos. 9 angedeutet.

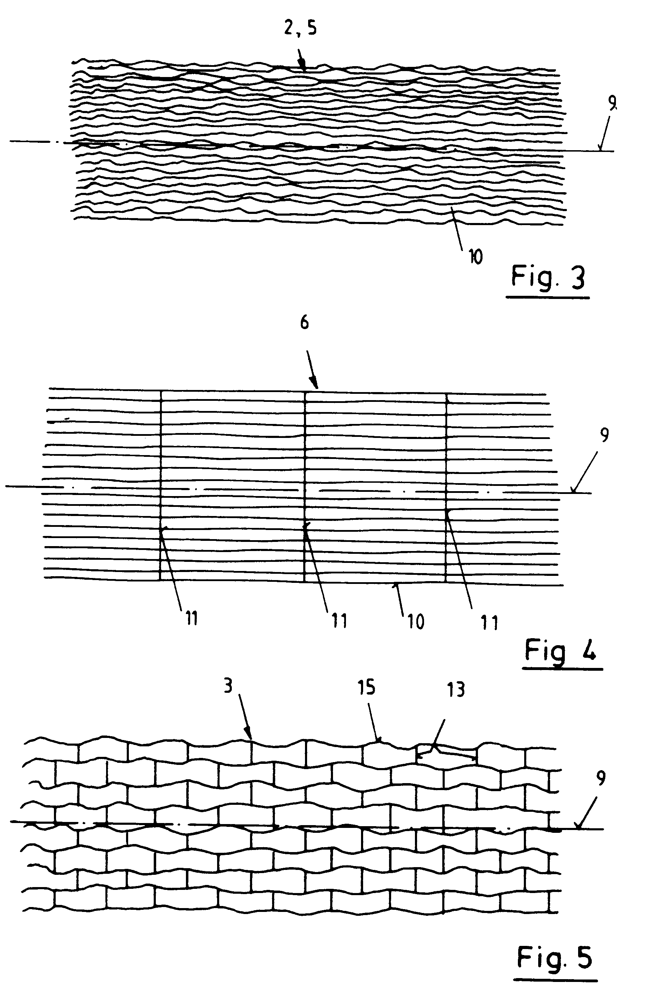

Fig. 3 zeigt ebenfalls flach gelegt das Kohlefaserkabel 2, 5, das aus einer Vielzahl von sich in axialer Richtung 9 erstreckenden, zueinander im wesentlichen parallelen und nur gering miteinander verzwirnten Kohlfasern 10 besteht.

Fig. 4 zeigt das - ebenfalls flach gelegte - Kohlefaserband 6, bei dem die Kohlefasern 10 durch Querfäden 11 zu einem Band miteinander verbunden sind.

Fig. 5 zeigt das ebenfalls flach gelegte Wabenmaterial 3 mit Längsstegen 12, die über auf Lücke gesetzte Querstege 13 miteinander verbunden sind. In Wirklichkeit wird das Wabenmaterial durch sich in Querrichtung erstreckende, wellenförmige Bänder gebildet, die an den Basen ihrer U-Profile jeweils miteinander verklebt sind. Die doppelt gelegten Basen bilden die Querstege 13 aus und die Schenkel der U-Profile die Längsstege 12.

Das beschriebene Rohr dient nach entsprechender Komplettierung vorzugsweise als Umlenkwelle oder Expansionswelle.


## Patentansprüche

1. Rohr, insbesondere für eine Umlenkwelle, Expansionswelle und dergleichen, hergestellt unter Verwendung von kunstharzgetränkten Fasern, wobei das Rohr in Sandwichbauweise aus einem Innenmantel (1, 2) und einem Außenmantel (4, 5, 6) aus kunstharzgetränktem Gewebe besteht, die zwischen sich eine Mittelschicht (3) aus einem Wabenmaterial einschließen, worauf sich gegebenenfalls eine weitere Mittelschicht (3) und ein Außenmantel (4, 5, 6) aufbaut, wobei der Innenmantel ggfs. aus Fasergewebe (1) besteht, der Außenmantel aus einem Fasergewebe (4) und einem Faserband (6) besteht und der Innenmantel (1, 2) und/oder der Außenmantel (4, 5, 6) Fasern (7, 8, 10) haben, die sich im wesentlichen in axialer Richtung (9) des Rohres erstrekken,
**dadurch gekennzeichnet,**
daß der Innenmantel aus dem Fasergewebe (1), einem Faservlies oder einem Fasergelege besteht, auf dessen Außenseite ein Faserkabel (2) aufgebracht ist, und daß der Außenmantel von innen nach außen aus dem Fasergewebe (4), einem Faserkabel (5) und dem Faserband (6) besteht.

2. Rohr nach Anspruch 1,
**dadurch gekennzeichnet,**
daß das Wabenmaterial (3) aus Papiermaterial oder Kunststoff besteht.

3. Rohr nach Anspruch 1 oder 2,
**dadurch gekennzeichnet,**
daß die Bestandteile (1,2) des Innenmantels und/oder die Bestandteile (4,5,6) des Außenmantels zumindest

3

überwiegend aus Kohlefasern und/oder Aramidfasern bestehen.

**Claims**

1. A tube, particularly for a guide roller, expansion shaft and the like produced by using resin saturated fibers, wherein the tube in sandwich type construction is consisting of an inner coat (1, 2) and an outer coat (4, 5, 6) of resin saturated web material which in between include a central layer (3) of a honeycomb material, whereupon possibly a further central layer (3) and an outer coat (4, 5, 6) is assembled wherein the inner coat possibly is consisting of a fiber web (1), the outer coat consisting of a fiber web (4) and a fiber band (6), and the inner coat (1, 2) and/or the outer coat (4, 5, 6) being provided with fibers (7, 8, 10) extending substantially in axial direction (9) of the tube,
characterized in that
the inner coat is consisting of a fiber web (1), a fiber fleece or a fiber layer on the outside of which a fiber cable (2) is applied, and that the outer coat from the inside to the outside is consisting of a fiber web (4), a fiber cable (5) and the fiber band (6).

2. A tube according to claim 1,
characterized in that
the honeycomb material (3) is consisting of paper material or of artificial resin.

3. A tube according to claim 1 or 2,
characterized in that
the components (1, 2) of the inner coat and/or the components (4, 5, 6) of the outer coat at least are consisting predominantly of carbon fibers and/or aramid fibers.

**Revendications**

1. Tube, en particulier destiné à un arbre transversal, un arbre d'expansion ou similaire, fabriqué en utilisant des fibres imprégnées de matière plastique, le tube se composant, en une structure de sandwich, d'une enveloppe intérieure (1, 2) et d'une enveloppe extérieure (4, 5, 6) en tissu imprégné de matière plastique qui enferment entre elles une couche centrale (3) en un matériau en nid d'abeilles sur laquelle s'appliquent éventuellement une autre couche centrale (3) et une enveloppe extérieure (4, 5, 6), l'enveloppe intérieure se composant éventuellement de tissu de fibres (1), l'enveloppe extérieure se compose d'un tissu de fibres (4) et d'une bande de fibres (6) et l'enveloppe intérieure (1, 2) et/ou l'enveloppe extérieure (4, 5, 6) comportent des fibres qui s'étendent sensiblement dans la direction axiale (9) du tube,
caractérisé en ce que,
l'enveloppe intérieure se compose du tissu de fibres (1), d'une nappe de fibres ou d'un voile de fibres sur le côté extérieur duquel est disposé un câble de fibres (2), et en ce que l'enveloppe extérieure se compose, de l'intérieur vers l'extérieur, du tissu de fibres (4), d'un câble de fibres (5) et de la bande de fibres (6).

2. Tube selon la revendication 1,
caractérisé en ce que,
le matériau en nid d'abeilles (3) se compose d'un matériau en papier ou d'une matière plastique.

3. Tube selon la revendication 1 ou 2,
caractérisé en ce que,
les composants (1, 2) de l'enveloppe intérieure et/ou les composants (4, 5, 6) de l'enveloppe extérieure se composent au moins de façon prépondérante de fibres de carbone et/ou de fibres d'aramide.

X

6

5

3

1

2

4

## Fig. 1

1,4

8

9

7

## Fig 2

2, 5

9

10

<u>Fig. 3</u>

6

9

11   11   10   11

<u>Fig 4</u>

3   15   13

9

<u>Fig. 5</u>